# EUROPÄISCHE PATENTSCHRIFT

(11) **EP 0 835 898 B1**
(45) Veröffentlichungstag und Bekanntmachung des Hinweises auf die Patenterteilung: **26.01.2005**
(21) Anmeldenummer: 97116854.7
(22) Anmeldetag: 29.09.1997
(51) Int. Cl.: C08J 5/12, C08J 3/22, C08L 21/00

(54) **Verbundkörper aus einem thermoplastischen Polymeren mit direkt angeformten Funktionselementen**
Composites comprising thermoplastic polymers with integrally molded functional elements
Articles comprenant des polymères thermoplastiques avec des éléments fonctionnels moulés intégralement

(30) Priorität: 11.10.1996 DE 19641904
(43) Veröffentlichungstag der Anmeldung: 15.04.1998
(73) Patentinhaber: Ticona GmbH, 65451 Kelsterbach (DE)
(72) Erfinder: Rennar, Nikolaus, Prof. Dr., 97294 Unterpleichfeld (DE); Schönefeld, Gerhard, Prof. Dr., 97273 Kürnach (DE); Schalek, Tanja, Dr., 96317 Kronach (DE)

(56) Entgegenhaltungen:
- EP-A- 0 344 427
- EP-A- 0 682 060
- DE-C- 4 439 766
- W. KLEEMANN: "Einführung in die Rezeptenentwicklung der Gummiindustrie; 2. Aufl. " 1966 , VEB DEUTSCHER VERLAG FÜR GRUNDSTOFFINDUSTRIE , LEIPZIG XP002052705 * Seite 366, Zeile 10 - Zeile 14 *

## Beschreibung

Die Erfindung betrifft Thermoplast-Gummi-Verbundkörper, vorzugsweise aus einer Kombination des technischen Werkstoffs Polyacetal, insbesondere Polyoxymethylen, oder einem Polyester mit direkt angeformten Funktionselementen aus einem oder mehreren vernetzten Kautschuken (Elastomere).

Verbundkörper aus einer Formmasse auf Basis von aliphatischen Polyamiden und Carboxylgruppen enthaltenden Kautschuken sind aus der EP-A-0344427 bekannt. In der EP-A-0682060 werden Verbunde zwischen vulkanisierten Elastomeren und thermoplastischen Elastomeren abgeleitet von Polyetheramiden offenbart.

Der technische Werkstoff Polyacetal, insbesondere Polyoxymethylen (POM), hat ausgezeichnete mechanische Eigenschaften und ist darüber hinaus auch widerstandsfähig gegen alle üblichen Lösemittel und Kraftstoffe. Formteile aus Polyoxymethylen werden daher häufig in kraftstofführenden Systemen verwenaet. Aufgrund der sehr guten Resistenz gegen Chemikalien werden auch Gehäuse aus Polyoxymethylen hergestellt. POM weist aber bei Raumtemperatur einen niedrigen mechanischen Dämpfungsfaktor auf, was in einigen Anwendungsfällen den Einsatz von weichen Dämpfungselementen erforderlich macht. Beim Einbau von Formteilen aus Polyoxymethylen ist zudem oftmals an Verbindungsstellen eine Abdichtung erforderlich. Die hohe Oberflächenhärte von Formteilen aus POM und der niedrige Gleitreibungskoeffizient von POM können zu einem Verrutschen von aufliegenden Gegenständen führen und die Bediensicherheit von Schaltelementen und Bedienungselementen aus POM einschränken.

Bislang werden entweder Dichtungen und Dämpfungselemente separat bereitgestellt und üblicherweise in einem zusätzlichen Arbeitsschritt mechanisch verankert, was zusätzliche Arbeit und teilweise erhebliche Zusatzkosten verursacht.

Bekannt sind auch Formteile aus Polyacetal mit direkt angeformten Funktionselementen, die unter Verwendung nicht vernetzter Kautschuke hergestellt wurden (DE-C 44 39 766). Die Haftfestigkeit derartiger Verbundkörper ist jedoch noch nicht zufriedenstellend.

Aufgabe der vorliegenden Erfindung war es, einen Verbundkörper aus mindestens einem Polyacetal bzw. Polyester mit direkt angeformten Funktionselementen zu schaffen, bei dem die genannten Nachteile nicht vorhanden sind.

Gelöst wird diese Aufgabe durch einen Thermoplast-Gummi-Verbundkörper, bestehend aus
a) mindestens einem Polyacetal oder einem Polyester,
b) mindestens einem Kautschuk-Copolymerisat,
c) mindestens einem verstärkenden Füllstoff,
d) mindestens einem Vernetzer und
e) gegebenenfalls weiteren üblichen Zuschlagstoffen.

Um die Haftung der Kautschuk-Komponente an dem Polyacetal oder Polyester zu erhöhen, kann ferner f) mindestens ein Phenolharz und/oder dessen Phenol- und Aldehydausgangskomponente in dem Verbundkörper enthalten sein.

Gegenstand der Erfindung ist auch ein Verfahren zur Herstellung des zuvor genannten Thermoplast-Gummi-Verbundkörpers, das durch folgende Schritte gekennzeichnet ist:
A) Mischen von mindestens einer Komponente b) mit der Komponente c) und gegebenenfalls weiteren, üblichen Zuschlagstoffen sowie der Komponente f) in Abwesenheit von vernetzenden Bestandteilen unter Erwärmung bei einer Temperatur von 105 bis 150°C,
B) Zumischen der Komponente d) bei einer Temperatur unterhalb 100°C,
C) Verbinden der erhaltenen Mischung aus den Schritten A) und B) mit einem vorgelegten Polyacetal- oder Polyesterteil bei 130 bis 170°C durch Anspritzen, oder Coinjektion und
D) Vulkanisieren des Kautschuk-Copolymerisats unter Bildung des Thermoplast-Gummi-Verbundkörpers in einer Werkzeugform bei 140 bis 180°C.

Als Polyacetal (Komponente a), das bei dem Verbundkörper Verwendung findet, eignen sich vor allem die bekannten Polyoxymethylene (POM), wie sie beispielsweise in der DE-A 29 47 490 beschrieben sind. Es handelt sich hierbei im allgemeinen um unverzweigte lineare Polymere, die in der Regel mindestens 80 %, vorzugsweise mindestens 90 %, Oxymethyleneinheiten (-CH₂O-) enthalten. Der Begriff Polyoxymethylene umfaßt dabei sowohl Homopolymere des Formaldehyds oder seiner cyclischen Oligomeren wie Trioxan oder Tetroxan als auch entsprechende Copolymere.

Homopolymere des Formaldehyds oder Trioxans sind solche Polymere, deren Hydroxylendgruppen in bekannter Weise chemisch gegen Abbau stabilisiert sind, z.B. durch Veresterung oder Veretherung.

Copolymere sind Polymere aus Formaldehyd oder seinen cyclischen Oligomeren, insbesondere Trioxan, und cyclischen Äthern, cyclischen Acetalen und/oder linearen Polyacetalen.

Als Comonomere kommen 1) cyclische Äther mit 3, 4 oder 5, vorzugsweise 3 Ringgliedern, 2) von Trioxan verschiedene cyclische Acetale mit 5 bis 11, vorzugsweise 5, 6, 7 oder 8 Ringgliedern und 3) lineare Polyacetale, jeweils in Mengen von 0,1 bis 20, vorzugsweise 0,5 bis 10 Mol-%, in Frage. Am besten eignen sich Copolymere aus 99,5 - 95 Mol-% Trioxan und 0,5 bis 5 Mol-% einer der vorgenannten Cokomponenten.

Die eingesetzten Polyacetal-Polymere haben im allgemeinen einen Schmelzindex (MFR-Wert 190/2,16) von 2 bis 50 g/10 min (DIN 53735).

Als Polyester (Komponente a) ist vorzugsweise Polybutylenterephthalat geeignet.

Das Kautschuk-Copolymerisat (Komponente b) besteht aus einem konjugierten Dien und einem monoolefinischen Monomer. Verwendete Diene sind Butadien(1,3), Isopren, 2,3-Dimethylbutadien(1,3) oder deren Gemische. Als monoolefinisches Monomer wird vorzugsweise Acrylnitril und/oder Methacrylnitril eingesetzt. Insbesonders bewährt hat sich Acrylnitril-Butadien-Copolymerisat.

Es war überraschend, daß die genannten Kautschuke in vernetzter Form eine wesentlich bessere Haftfestigkeit zu dem Thermoplast der Verbundkörper aufweisen als die aus dem Stand der Technik bekannten Kautschuke.

Bei dem verstärkenden Füllstoff (Komponente c) handelt es sich um feinteilige, gefällte Kieselsäure mit einer BET-Fläche von 40 bis 350 m²/g, einer CTAB-Fläche von 50 bis 350 m²/g, einem mittleren Teilchendurchmesser von 50 bis 150 nm und einer DBP-Zahl von 50 bis 350 cm³/100 g oder um eine Mischung dieser Kieselsäure mit Ruß, der eine Jod-Adsorptionszahl (ASTM-D 1510) von 10 bis 270 g/kg, eine CTAB-Fläche (ASTM-D 3765) von 5 bis 250 m²/g und eine DBP-Zahl (ASTM-D 2414) von 40 bis 180 cm³/100 g aufweist. Die Komponente c) liegt in einer Menge von 20 bis 80 Gew.-Teilen, vorzugsweise 30 bis 60 Gew.-Teilen vor, bezogen auf 100 Teile der Komponente b).

Als Vernetzer für das Kautschuk-Copolymerisat b) hat sich eine Mischung aus d1) Schwefel oder eine Kombination von Schwefel und einem Schwefelspender mit d2) einer Kombination aus d2-1) mindestens einem Sulfenamid-Beschleuniger und d2-2) mindestens einem Dithiocarbamat-Beschleuniger bewährt, wobei gegebenenfalls noch d2-3) mindestens ein Guanidin- und/oder Mercapto-Beschleuniger anwesend ist. Vorzugsweise wird als Sulfenamid-Beschleuniger N-Cyclohexyl-, N-tert.-Butyl-, N,N-Dicyclohexyl-2-benzothiazolylsulfenamid oder Gemische davon, als Dithiocarbamat-Beschleuniger Zink-dibenzyl-dithiocarbamat, als Guanidin-Beschleuniger N,N'-Diphenyl-, Di-o-tolylguanidin und o-Tolyl-biguanid oder Gemische davon und als Mercapto-Beschleuniger 2-Mercaptobenzothiazol eingesetzt.

Die Mengen der einzelnen Bestandteile der Komponente d) in der eingesetzten Kombination betragen:
Schwefel: 0,2 bis 1,5 Gew.-Teile, vorzugsweise 0,4 bis 0,7 Gew.-Teile
Schwefelspender: 0,2 bis 2,5 Gew.-Teile, vorzugsweise 0,5 bis 1,5 Gew.-Teile,
Sulfenamid: 0,2 bis 2,5 Gew.-Teile, vorzugsweise 0,5 bis 1,5 Gew.-Teile
Dithiocarbamat: 0,2 bis 3,0 Gew.-Teile, vorzugsweise 1,5 bis 2,5 Gew.-Teile
Guanidin: 0 bis 1,0 Gew.-Teile, vorzugsweise 0,2 bis 0,4 Gew.-Teile
Mercapto: 0 bis 2,0 Gew.-Teile, vorzugsweise 0,6 bis 1,5 Gew.-Teile,
bezogen auf die Summe der Komponenten b) bis d).

Schwefelspender sind im allgemeinen organische Verbindungen, die den Schwefel in einer thermisch labilen Form enthalten, beispielsweise Dithio-bis-caprolactam.

Wird ein Schwefelspender verwendet, reduziert sich der Anteil des eingesetzten Schwefels entsprechend.

Die Beschleuniger wurden unter dem Gesichtspunkt ausgewählt, daß die Bildung sekundärer Amine während des Vulkanisationsvorgangs weitgehend vermieden wird. Auf keinen Fall treten krebserregende Nitrosamine auf.

Übliche Zuschlagstoffe im Sinne der vorliegenden Erfindung sind Alterungs- und Lichtschutzmittel, Stearinsäure, Zinkoxid, Weichmacher, Verarbeitungshilfsmittel, z.B. Kolophonium und Flammschutzmittel.

Als Alterungsschutzmittel können N-isopropyl- und N-(1,3-Dimethylbutyl)-N'-phenyl-p-phenylendiamin eingesetzt werden. Weichmacher sind bekannte, handelsübliche Produkte, vorzugsweise Methylen-bis-thioglykolsäurebutylester. Stearinsäure und Zinkoxid dienen als Aktivatoren bei der Vulkanisierung. Die Zuschlagstoffe der Komponente e) liegen in üblichen Mengen vor.

Als Komponente f) können Phenol-Formaldehydharze eingesetzt werden. Vorteilhaft jedoch ist, eine Phenolverbindung und einen Formaldehyd-Spender zu verwenden, um die Bildung des Phenolharzes in-situ während des Misch- und Vulkanisationsprozesses zu erreichen. Als Phenolverbindung hat sich Resorcin und als Formaldehydspender Hexamethylendiamin günstig erwiesen. Die Komponente f) wird in einer Menge von 0,5 bis 10 Gew. Teilen, vorzugsweise 3 bis 6 Gew.-Teilen der Mischung b) bis e) zugesetzt, bezogen auf 100 Gew.-Teile der Komponente b).

Bei dem Verfahren gemäß der vorliegenden Erfindung wird in der Stufe A) zuerst eine Grundmischung hergestellt. Dies wird vorzugsweise unter Verwendung eines Innenmischers oder Stempelkneters mit ineinandergreifenden Rotoren durchgeführt, wobei die Mischwerkzeuge mit oder ohne Rotorspaltverstellung ausgestattet sind.

Es hat sich als günstig erwiesen, zu Beginn des Mischvorganges das Kautschuk-Copolymerisat vorzulegen, dann den verstärkenden Füllstoff und gegebenenfalls die Phenolausgangskomponente der Komponente f) und anschließend Weichmacher, Alterungs- und Lichtschutzmittel, Stearinsäure, Zinkoxid und den Formaldehydspender zuzugeben. Durch die versetzte Zugabe der beiden Ausgangskomponenten der Komponente f) wird einer vorzeitigen Harzbildung entgegengewirkt.

In der sich anschließenden Stufe B) wird beispielsweise auf einem Walzwerk die Vernetzerkomponente d) bei Temperaturen von 40 bis 90°C zugegeben. Es bildet sich dabei ein Walzfell, das der Stufe C) zugeführt werden kann. Es ist auch möglich, dieses Fell beispielsweise mit flüssigem Stickstoff abzukühlen und das resultierende spröde Gut zu Granulat zu zerkleinern, das dann gekühlt aufbewahrt und einer späteren Verwendung zugeführt werden kann. Selbstverständlich kann der Mischvorgang der Stufe B) auch auf anderen, handelsüblichen Mischaggregaten vorgenommen werden.

Im Schritt C) wird ein Formteil aus einem thermoplastischen Polymer gemäß der Erfindung vorgelegt und bei 130 bis 170°C, vorzugsweise 140 bis 155°C mit der für den gewünschten Artikel benötigten Menge der Mischung aus den Schritten A) und B) durch Anspritzen, Coextrusion oder Coinjektion nach bekannten Verfahren vereint.

Anschließend wird im Schritt D) der vulkanisierbare Anteil des erhaltenen verbundenden Formteils in einer Werkzeugform bei 140 bis 180°C, vorzugsweise 150 bis 165°C vulkanisiert, wobei eine fest haftende Verbindung zwischen den beiden Hauptkomponenten - thermoplastischem Polymer und dem vernetzten Kautschuk erfolgt.

Als Funktionselemente sollen im Rahmen der vorliegenden Erfindung z.B. Dicht- und/oder Dämpfungselemente verstanden werden oder aber auch Bereiche zur Verbesserung der Rutschfestigkeit wie Griffmulden und ähnliches.

Der Ausdruck "direkt angeformt" soll im Rahmen der vorliegenden Erfindung so verstanden werden, daß die Funktionselemente zusammen mit den Formteilen aus dem thermoplastischen Polymer, mit denen sie einen haftfesten Verbund eingehen sollen, vorzugsweise in einem Einstufenverfahren hergestellt werden, beispielsweise in einem Mehrkomponentenspritzgußverfahren oder durch Coextrusion.

Durch den Einsatz der oben angegebenen Elastomeren können die Dicht- oder Dämpfungselemente direkt an Formteile aus thermoplastischen Polymeren angeformt werden, ohne daß weitere Montageschritte erforderlich werden. Durch den Wegfall der bisher benötigten Verarbeitungsschritte zur Montage von Funktionselementen ist eine erhebliche Kosteneinsparung bei der Produktion der erfindungsgemäßen Formteile und bei deren Montage zu erzielen.

Anwendungsfelder für die erfindungsgemäßen Formteile sind beispielsweise Fittings, Kupplungen, Dichtungselemente, Gummilager, Gehäuse im Automobilbau wie Türschloßgehäuse, Fensterhebergehäuse, Schiebedachdichtelemente und ähnliche sowie Befestigungselemente mit guten Dämpfungseigenschaften beispielsweise Clips oder rutschfeste Bedienungselemente wie Knöpfe oder Griffmulden an Schreibstiften oder Schalthebeln.

Da ein Meßverfahren für die Haftfestigkeit der Komponenten thermoplastisches Polymer und Gummi des Verbundkörpers gemäß der Erfindung nicht bestand, wurde ein geeignetes Meßverfahren entwickelt.

Um die hierfür erforderlichen Prüfkörper herzustellen, wurden aus einer Platte, die eine Stärke von 4 mm aufwies, Langlöcher mit dem Maß 120x15 mm herausgefräst. Auf der einen Seite wurde ein Überlauf für den Kautschukaustrieb angebracht. Diese Platte wurde mit zwei ebenen Platten verschlossen, nachdem in die Langlöcher jeweils obenbündig ein Teil eines thermoplastischen Polymers mit den Maßen 60x15x4 mm und in das verbliebene Leervolumen eine entsprechende Kautschukmenge aus den Komponenten b) bis gegebenenfalls f) eingebracht wurde. Dieses System wurde in eine Heizpresse gebracht, eine Zuhaltekraft von 157 kN eingestellt und der Kautschukanteil bei einer gewünschten Temperatur vulkanisiert. Es entstanden Prüfstäbe mit den Abmessungen 120x15x4 mm, die zur einen Hälfte aus thermoplastischem Polymer und zur anderen aus Gummi bestanden, wobei Thermoplast und Gummi an den Stirnflächen miteinander verbunden sind.

Diese Prüfstäbe wurden auf einer Zugprüfmaschine Typ 1474 (Fa. Zwick, Bundesrepublik Deutschland) in Anlehnung an den Zugstab 5 nach DIN 53455 geprüft.

Gemessen wurde die Zugfestigkeit σ_{B} (N/mm²) bei Normklima. Dieser Wert wurde auf die Haftfestigkeit βₘₐₓ (N)/mm²) umgerechnet. Die Ergebnisse der einzelnen Proben sind in der Tabelle aufgeführt.

### Beispiele

Die Mengenangaben beziehen sich auf Gewichtsteile.

Nach dem beschriebenen Verfahren werden die in Tabelle 1 aufgeführten Komponenten gemischt, zu einem Walzfell verarbeitet und zusammen mit Polyoxymethylen (Hostaform 9021, Schmelzindex (MFI 190/2,16) 9 g/10 min, Hersteller Hoechst AG, Frankfurt a.M., Bundesrepublik Deutschland) nach der obigen Vorschrift zu Prüfkörpern verarbeitet. Die Prüfkörper wurden auf der Zugprüfmaschine Type 1474 mit einer Zug-Prüfgeschwindigkeit V = 50 mm/min unter Normklima geprüft. Die Ergebnisse sind in Tabelle 2 angeführt.

**Tabelle 1**

| Bestandteil | Handelsname | Bsp. 1 | Bsp. 2 | Bsp. 3 |
|---|---|---|---|---|
| Nitrilkautschuk | ®Perbunan NT 3945 | 100 | 100 | 100 |
| Ruß | ®Corax N 550 | 37,5 | 37,5 | 37,5 |
| gefällte Kieselsäure | ®Ultrasil VN 2 | 15 | 15 | 15 |
| synthetischer Weichmacher | | 5 | 5 | 3,5 |
| Kolophonium | | - | - | 1,5 |
| Resorcin-Stearinsäure-Gemisch | ®Cohedur RS | 3 | 3 | 3 |
| Formaldehyd-Spender | ®Cohedur A/100 | 2 | 2 | 2 |
| Alterungsschutzmittel | | 2 | 2 | 2 |
| Lichtschutzwachs | | 1 | 1 | 1 |
| Stearinsäure | | 2 | 2 | 2 |
| Zinkweiß | | 4 | 4 | 4 |
| Schwefel | | 0,8 | 0,8 | 0,8 |
| Beschleuniger CBS | ®Vulkacit CZ | 2 | 1 | 1 |
| Beschleuniger ZBEC | ®Vulkacit ZBEC | 4 | 3 | 3 |

| | | | | |
|---|---|---|---|---|
| ® geschütztes Warenzeichen Perbunan NT 3945, Cohedur RS, Cohedur A/100 Vulkacit CZ und Vulkacit ZBEC sind Produkte der Fa. Bayer AG, Leverkusen, Bundesrepublik Deutschland Corax N 550 und Ultrasil VN2 sind Produkte der Fa.Degussa AG, Frankfurt a.M. | | | | |

**Tabelle 2**

| Thermoplast | POM | POM | POM |
|---|---|---|---|
| Vulkanisat | Bsp. 1 | Bsp. 2 | Bsp. 3 |
| Vulkanisationstemperatur T_{c}/°C | 150 | 150 | 155 |
| Vulkanisationszeit t₉₀/min | 4 | 4,3 | 4,5 |
| Vulkanisathärte Shore A* | 67 | 65 | 67 |
| Haftfestigkeit des Verbundkörpers σₘₐₓ/N/mm² | 6,3 | 6,7 | 6,3 |

| | | | |
|---|---|---|---|
| * DIN 53505 | | | |

### Vergleich

Die Heiß-Klebeverbindung zweier nicht vorbehandelter POM-Teile mit 3 cm² Klebefläche, verbunden mittels eines Klebstoffs auf NBR-Phenolharz-Basis (Kontaktzeit: 1 Stunde bei 130°C) hält nach dreitägiger Lagerung bei Raumtemperatur einer Zugscherfestigkeit T_{B} ≤ 1,77 N/mm² (18,0 kp/cm²) stand. (s.H. Lucke: Kunststoffe und ihre Verklebung, Verlag Brunke Garrels Hamburg, 1967, S. 68)

## Patentansprüche

1. Thermoplast-Gummi-Verbundkörper, bestehend aus
a) mindestens einem Polyacetal oder einem Polyester,
b) mindestens einem Kautschuk-Copolymerisat,
c) mindestens einem verstärkenden Füllstoff,
d) mindestens einem Vemetzer und
e) gegebenenfalls weiteren üblichen Zuschlagstoffen.

2. Verbundkörper nach Anspruch 1, **dadurch gekennzeichnet, dass** er zusätzlich f) mindestens ein Phenolharz und/oder dessen Phenol- und Aldehyd-Ausgangskomponente enthält und die Komponente f) aus mindestens einer phenolischen Komponente und mindestens einem Aldehyd besteht.

3. Verbundkörper nach einem oder mehreren der Ansprüche 1 bis 2, **dadurch gekennzeichnet, dass** die Komponente b) aus einem konjugierten Dien, vorzugsweise Butadien-(1,3), Isopren, 2,3-Dimethyl-Butadien-(1,3) oder Gemischen davon, und einem monoolefinischen Monomer, vorzugsweise Acrylnitril, Methacrylnitril oder Gemischen davon, besteht.

4. Verbundkörper nach einem oder mehreren der Ansprüche 1 bis 3, **dadurch gekennzeichnet, dass** die Komponente c) feinteilige, gefällte Kieselsäure mit einer BET-Fläche von 40 bis 350 m²/g, einer CTAB-Fläche von 50 bis 350 m²/g, einem mittleren Teilchendurchmesser von 10 bis 150 nm und einer DBP-Zahl von 50 bis 350 cm³/100g oder eine Kombination der Kieselsäure mit Ruß, der eine Jod-Adsorptionszahl von 10 bis 270 g/kg, eine CTAB-Fläche von 5 bis 250 m²/g und eine DBP-Zahl von 40 bis 180 cm³/100 g aufweist, ist.

5. Verbundkörper nach einem oder mehreren der Ansprüche 1 bis 4, **dadurch gekennzeichnet, dass** die Komponente c) in einer Menge von 20 bis 80 Gew.-Teilen, bezogen auf 100 Gew.-Teile der Komponente b) enthalten ist.

6. Verbundkörper nach einem oder mehreren der Ansprüche 1 bis 5, **dadurch gekennzeichnet, dass** die Komponente d) aus d1) Schwefel oder einer Kombination mit einem Schwefelspender und d2) einer Kombination von d2-1) mindestens einem Sulfenamid-Beschleuniger, d2-2) mindestens einem Dithiocarbamat-Beschleuniger und gegebenenfalls d2-3) mindestens einem Guanidin- und/oder Mercapto-Beschleuniger besteht.

7. Verbundkörper nach Anspruch 6, **dadurch gekennzeichnet, dass** als Sulfenamid-Beschleuniger N-Cyclohexyl-, N-tert.-Butyl-, N,N-Dicyclohexyl-2-benzothiazolyl-sulfenamid oder Gemische davon, als Dithiocarbamat-Beschleuniger Zink-dibenzyl-dithiocarbamat, als Guanidin-Beschleuniger N,N'-Diphenyl-, Di-o-tolylguanidin und o-Tolyl-biguanid oder Gemische davon und als Mercapto-Beschleuniger 2-Mercaptobenzothiazol eingesetzt wird

8. Verfahren zur Herstellung eines Thermoplast-Gummi-Verbundkörpers wie in den Ansprüchen 1 bis 7 definiert, **dadurch gekennzeichnet, dass** es folgende Verfahrensschritte enthält
A) Mischen von mindestens einer Komponente b) mit der Komponente c) und gegebenenfalls weiteren, üblichen Zuschlagstoffen e) sowie der Komponente f) in Abwesenheit von vernetzenden Bestandteilen unter Erwärmung bei einer Temperatur von 105 bis 150°C,
B) Zumischen der Komponente d) bei einer Temperatur unterhalb 100°C,
C) Verbinden der erhaltenen Mischung aus den Schritten A) und B) mit einem vorgelegten Polyacetal- oder Polyesterteil bei 130 bis 170°C durch Anspritzen, Coextrusion oder Coinjektion und
D) Vulkanisieren des Kautschuk-Copolymerisats unter Bildung des Thermoplast-Gummi-Verbundkörper in einer Werkzeugform bei 140 bis 180°C.

9. Verfahren nach Anspruch 8, **dadurch gekennzeichnet, dass** das Mischen im Schritt A) unter Verwendung eines Innenmischers oder Stempelkneters mit ineinandergreifenden Rotoren durchgeführt wird, wobei die Mischwerkzeuge mit oder ohne Rotorspaltverstellung ausgestattet sind.

10. Verfahren nach Anspruch 8, **dadurch gekennzeichnet, dass** die Temperatur in der Stufe B) bei 40 bis 90°C gehalten wird.

11. Thermoplast-Gummi-Formartikel, hergestellt aus einem Thermoplast-Gummi Verbundkörper nach einem oder mehreren der Ansprüche 1 bis 7.

12. Formartikel nach Anspruch 11 als Fittings, Kupplungen, Dichtungselemente, Gummilager, Gehäuse im Automobilbau, Befestigungs- oder Bedienungselemente.

## Claims

1. A thermoplastic/rubber composite body comprising
a) at least one polyacetal or one polyester,
b) at least one rubber copolymer,
c) at least one reinforcing filler,
d) at least one crosslinking agent and
e) if appropriate further customary additives.

2. A composite body as claimed in claim 1, which additionally comprises f) at least one phenolic resin and/or phenol and aldehyde starting components thereof, and wherein component f) comprises at least one phenolic component and at least one aldehyde.

3. A composite body as claimed in one or more of claims 1 to 2, wherein component b) comprises a conjugated diene, preferably buta-(1,3)-diene, isoprene, 2,3-dimethyl-buta-(1,3)-diene or mixtures thereof, and a monoolefinic monomer, preferably acrylonitrile, methacrylonitrile or mixtures thereof.

4. A composite body as claimed in one or more of claims 1 to 3, wherein component c) is finely divided precipitated silica having a BET area of 40 to 350 m²/g, a CTAB area of 50 to 350 m²/g, an average particle diameter of 10 to 150 nm and a DBP number of 50 to 350 cm³/100g, or a combination of silica acid with carbon black which has an iodine adsorption number of 10 to 270 g/kg, a CTAB area of 5 to 250 m²/g and a DBP number of 40 to 180 cm³/100 g.

5. A composite body as claimed in one or more of claims 1 to 4, which comprises component c) in an amount of 20 to 80 parts by weight per 100 parts by weight of component b).

6. A composite body as claimed in one or more of claims 1 to 5, wherein component d) comprises d1) sulfur or a combination with a sulfur donor and d2) a combination of d2-1) at least one sulfenamide accelerator, d2-2) at least one dithiocarbamate accelerator and, if appropriate, d2-3) at least one guanidine and/or mercapto accelerator.

7. A composite body as claimed in claim 6, wherein N-cyclohexyl-, N-tert-butyl-, or N,N-dicyclohexyl-2-benzothiazolyl-sulfenamide or a mixture thereof is employed as the sulfenamide accelerator, zinc dibenzyldithiocarbamate is employed as the dithiocarbamate accelerator, N,N=-diphenyl-, di-o-tolylguanidine and o-tolyl-biguanide or a mixture thereof is employed as the guanidine accelerator and 2-mercaptobenzothiazole is employed as the mercapto accelerator.

8. A process for the preparation of a thermoplastic/rubber composite body as defined in claims 1 to 7, which comprises the following process steps:
A) mixing of at least one component b) with component c), and if appropriate further customary additives e) and component f), in the absence of crosslinking constituents, while heating at a temperature of 105 to 150°C,
B) admixing of component d) at a temperature below 100°C,
C) joining of the resulting mixture from steps A) and B) with an initially introduced polyacetal or polyester component at 130 to 170°C by injection molding-on, coextrusion or coinjection and
D) vulcanizing of the rubber copolymer to form the thermoplastic/rubber composite body in a die mold at 140 to 180°C.

9. The process as claimed in claim 8, wherein the mixing in step A) is carried out using an internal mixer or plunger kneader with intermeshing rotors, the mixing tools being equipped with or without a rotor gap adjustment.

10. The process as claimed in claim 8, wherein the temperature in stage B) is kept at 40 to 90°C.

11. A thermoplastic/rubber molded article produced from a thermoplastic/rubber composite body as claimed in one or more of claims 1 to 7.

12. A molded article as claimed in claim 11 as a fitting, coupling, sealing element, rubber bearing, housing in automobile construction or fixing or operating element.

## Revendications

1. Corps composite en caoutchouc-matière thermoplastique, constitué de
a) au moins un polyacétal ou un polyester,
b) au moins un copolymère-caoutchouc,
c) au moins une charge de renforcement,
d) au moins un agent de réticulation et
e) éventuellement d'autres additifs usuels.

2. Corps composite selon la revendication 1, **caractérisé en ce qu'**il contient additionnellement f) au moins une résine phénolique et/ou ses composants phénol et aldéhyde de départ, et le composant f) est constitué d'au moins un composant phénol et d'au moins un aldéhyde.

3. Corps composite selon la revendication 1 ou 2, **caractérisé en ce que** le composant b) consiste en un diène conjugué, de préférence le butadiène-(1,3), l'isoprène, le 2,3-diméthylbutadiène-(1,3) ou des mélanges de ceux-ci, et en un monomère mono-oléfinique, de préférence l'acrylonitrile, le méthacrylonitrile ou des mélanges de ceux-ci.

4. Corps composite selon une ou plusieurs des revendications 1 à 3, **caractérisé en ce que** le composant c) est de l'acide silicique précipité, finement divisé, ayant une surface BET de 40 à 350 m²/g, une surface CTAB de. 50 à 350 m²/g, un diamètre moyen de particule de 10 à 150 nm et un indice de DBP (absorption de phtalate de dibutyle) de 50 à 350 cm³/100 g, ou une association d'acide silicique et de noir de carbone, qui présente un indice d'adsorption d'iode de 10 à 270 g/kg, une surface CTAB de 5 à 250 m²/g et un indice DBP de 40 à 180 cm³/100 g.

5. Corps composite selon une ou plusieurs des revendications 1 à 4, **caractérisé en ce que** le composant c) est contenu en une quantité de 20 à 80 parties en poids, par rapport à 100 parties en poids du composant b).

6. Corps composite selon une ou plusieurs des revendications 1 à 5, **caractérisé en ce que** le composant d) consiste en d1) soufre ou une association avec un donneur de soufre et d2) une association de d2-1) au moins un accélérateur sulfénamide, d2-2) au moins un accélérateur dithiocarbamate et éventuellement d2-3) au moins un accélérateur guanidine et/ou mercapto.

7. Corps composite selon la revendication 6, **caractérisé en ce qu'**on utilise en tant qu'accélérateur sulfénamide du N-cyclohexyl-, N-tert-butyl-, N,N-dicyclohexyl-2-benzothiazolylsulfénamide ou des mélanges de ceux-ci, en tant qu'accélérateur dithiocarbamate du dibenzyldithiocarbamate de zinc, en tant qu'accélérateur guanidine de la N,N'-diphényl-, di-o-tolylguanidine ou du o-tolylbiguanide ou des mélanges de ceux-ci et en tant qu'accélérateur mercapto du 2-mercaptobenzothiazole.

8. Procédé pour la préparation d'un corps composite en caoutchouc-matière thermoplastique tel que défini dans les revendications 1 à 7, **caractérisé en ce qu'**il comporte les étapes suivantes de processus
A) mélange d'au moins un composant b) avec le composant c) et éventuellement d'autres additifs e) usuels et du composant f), en présence de composants de réticulation, avec chauffage à une température de 105 à 150°C,
B) addition du composant d) à une température inférieure à 100°C,
C) assemblage du mélange obtenu, provenant des étapes A) et B), avec un fragment polyacétal ou polyester à 130-170°C, par injection, coextrusion ou co-injection et
D) vulcanisation du copolymère-caoutchouc avec formation du corps composite en caoutchouc-matière thermoplastique dans une matrice de formage à une température de 140 à 180°C.

9. Procédé selon la revendication 8, **caractérisé en ce que** le mélange dans l'étape A) est effectué avec utilisation d'un mélangeur interne ou d'un malaxeur à piston et à rotors enchevêtrés, les outils de mélange étant munis ou non de réglage de l'espacement des rotors.

10. Procédé selon la revendication 8, **caractérisé en ce que** la température dans l'étape B) est maintenue à 40-90°C.

11. Articles moulés en caoutchouc-matière thermoplastique, fabriqués à partir d'un corps composite en caoutchouc-matière thermoplastique selon une ou plusieurs des revendications 1 à 7.

12. Articles moulés selon la revendication 11, en tant que joints, raccords, éléments d'étanchéité, supports caoutchoutés, boîtier dans la construction d'automobiles, éléments de fixation ou de commande.
